# EUROPEAN PATENT APPLICATION

(11) **EP 3 929 121 A1**
(43) Date of publication of application: **29.12.2021**
(21) Application number: 20759532.3
(22) Date of filing: 21.01.2020
(51) Int. Cl.: B65G 61/00, E05B 49/00, A47G 29/12, A47G 29/20, G06Q 10/08, E05B 65/00

(54) **DELIVERY BOX AND INFORMATION PROCESSING METHOD**

(30) Priority: 22.02.2019 JP 2019030808
(71) Applicant: Panasonic Intellectual Property Management Co., Ltd., Osaka-shi, Osaka 540-6207 (JP)
(72) Inventor: FURUKAWA, Junichi, Chuo-ku, Osaka-shi, Osaka 540-6207 (JP); SAKEMI, Junya, Chuo-ku, Osaka-shi, Osaka 540-6207 (JP); YAMAGUCHI, Hideaki, Chuo-ku, Osaka-shi, Osaka 540-6207 (JP); AKIMOTO, Masao, Chuo-ku, Osaka-shi, Osaka 540-6207 (JP); FUKUDA, Naohiro, Chuo-ku, Osaka-shi, Osaka 540-6207 (JP); UENO, Takeshi, Chuo-ku, Osaka-shi, Osaka 540-6207 (JP)
(74) Representative: Appelt, Christian W.
(86) International application number: PCT/JP2020/001802
(87) International publication number: WO 2020/170686

(57) **Abstract**

Delivery box (30) includes storage spaces (32) in which packages are housed, controller (35) that generates cryptographic keys for encrypting information indicating the storage states of packages in storage spaces (32), and wireless communicator (36) that establishes wireless communication with third portable terminal (60) to transmit the generated cryptographic keys to server device (20) via third portable terminal (60).

## Description

### [Technical Field]

The present invention relates to a delivery box and an information processing method.

### [Background Art]

In recent years, the number of packages handled by delivery services is rising sharply with an increase in mail-order sales of goods, and the incidence of re-deliveries due to consignees' absence has become a social problem. To address this problem, a conceivable countermeasure is to install a delivery locker (hereinafter, also referred to as a "delivery box") in which delivery staff of delivery companies is able to leave packages in the case of consignees' absence.

As one technique for the receipt of packages, Patent Literature (PTL) 1 discloses a delivery system that includes a package receiving box, a user terminal device carried by a user, and a server of a delivery source or a delivery company capable of establishing a network connection with the user terminal device.

### [Citation List]

### [Patent Literature]

[PTL1] Japanese Unexamined Patent Application Publication No. 2014-148850

### [Summary of Invention]

### [Technical Problem]

The present invention provides a delivery box and an information processing method that improve the safety of transmission and reception of information between a server device and the delivery box.

### [Solution to Problem]

A delivery box according to one aspect of the present invention includes a storage space in which a package is housed, a controller that generates a cryptographic key for encrypting information indicating a storage state of a package in the storage space, and a wireless communicator that establishes wireless communication with a portable terminal to transmit the cryptographic key generated to a server device via the portable terminal.

An information processing method according to one aspect of the present invention includes is an information processing method to be executed by a delivery box. The information processing method includes generating a cryptographic key for encrypting information indicating a storage state of a package in a storage space in which the package is housed, and establishing wireless communication with a portable terminal to transmit the cryptographic key generated to a server device via the portable terminal.

### [Advantageous Effects of Invention]

The delivery box and the information processing method according to the present invention improve the safety of transmission and reception of information between the server device and the delivery box.

### [Brief Description of Drawings]

[FIG. 1]

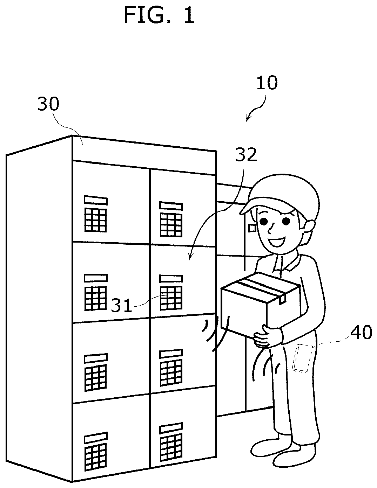

   FIG. 1 is an illustration of an overview of a delivery system according to an embodiment.
[FIG. 2]

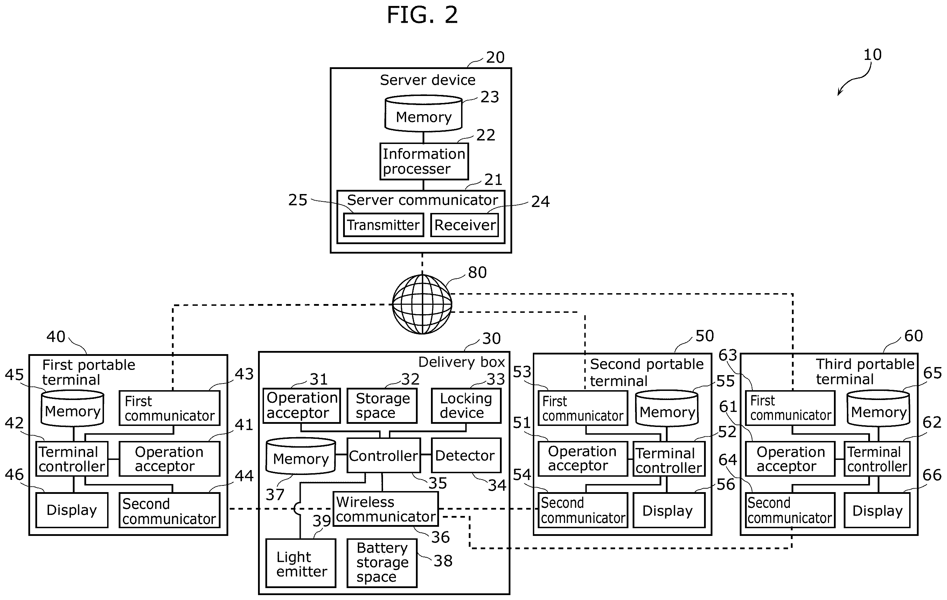

   FIG. 2 is a block diagram illustrating a functional configuration of the delivery system according to the embodiment.
[FIG. 3]

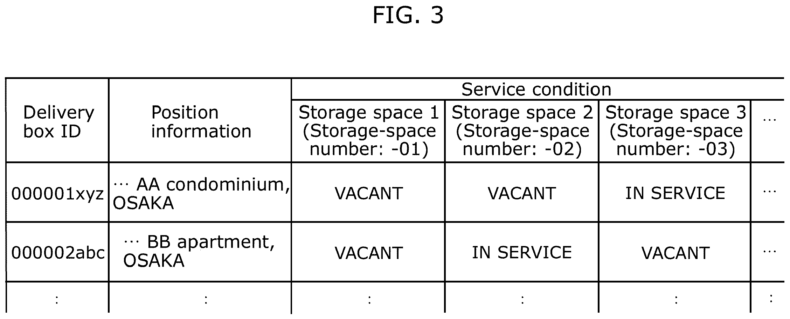

   FIG. 3 shows one example of management information.
[FIG. 4]

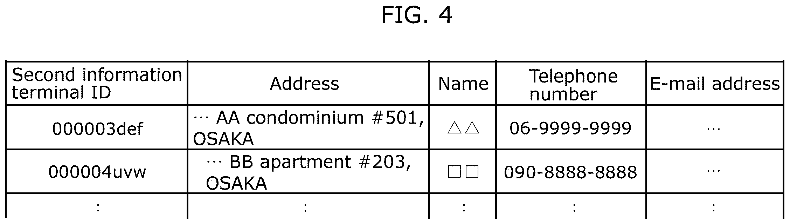

   FIG. 4 shows one example of customer information.
[FIG. 5]

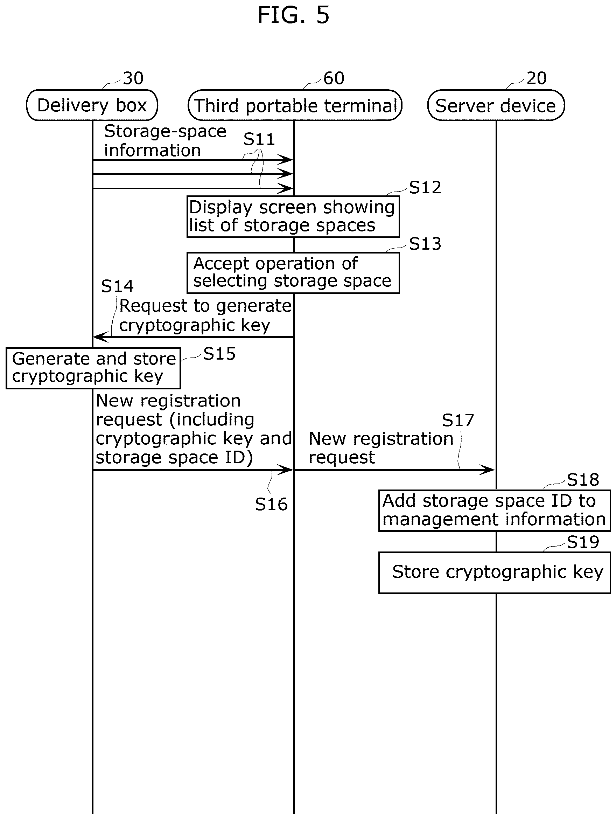

   FIG. 5 is a sequence diagram of exemplary operation 1 of the delivery system according to the embodiment.
[FIG. 6]

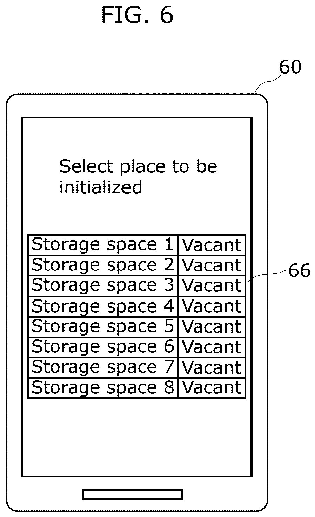

   FIG. 6 shows one example of a screen of lists of storage spaces.
[FIG. 7]

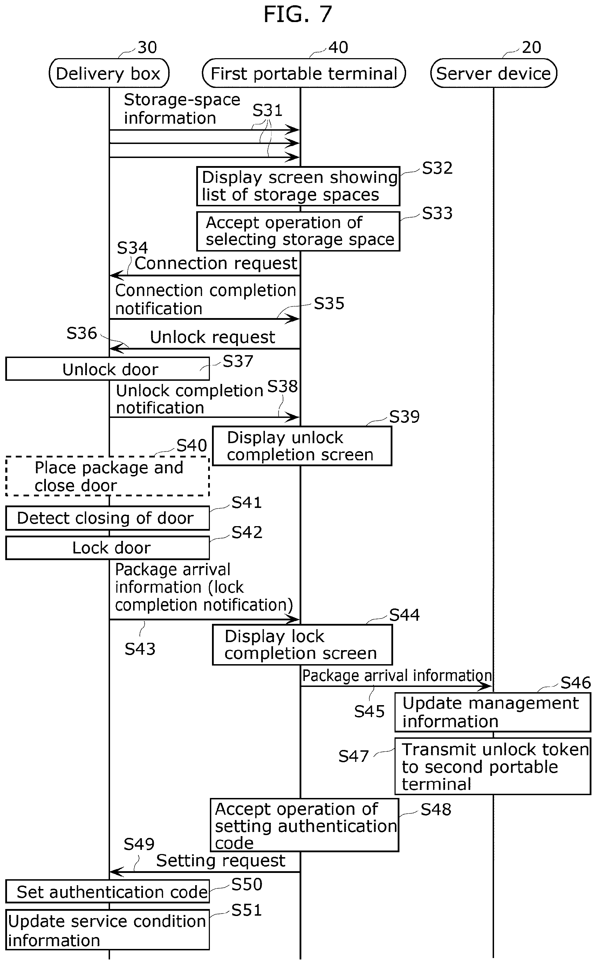

   FIG. 7 is a sequence diagram of exemplary operation 2 of the delivery system according to the embodiment.
[FIG. 8]

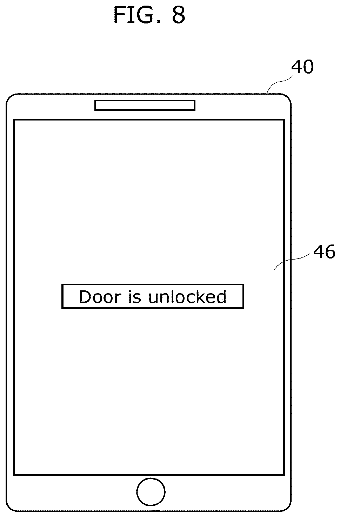

   FIG. 8 shows one example of an unlock completion screen.
[FIG. 9]

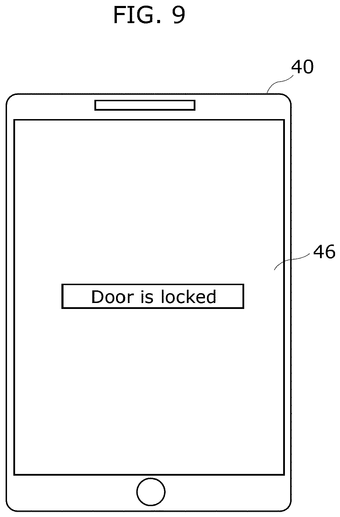

   FIG. 9 shows one example of a lock completion screen.
[FIG. 10]

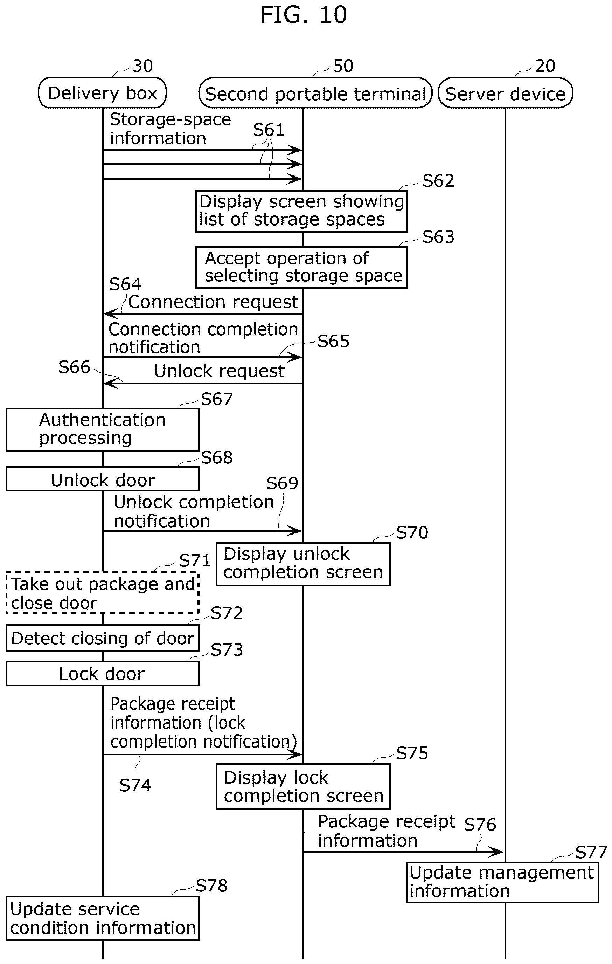

   FIG. 10 is a sequence diagram of exemplary operation 3 of the delivery system according to the embodiment.
[FIG. 11]

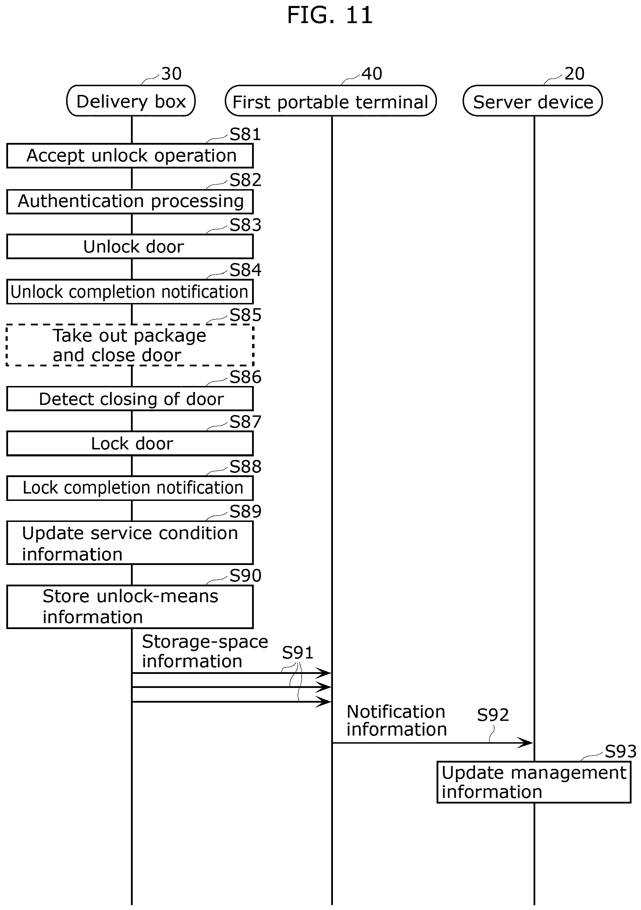

   FIG. 11 is a sequence diagram of exemplary operation 4 of the delivery system according to the embodiment.
[FIG. 12]

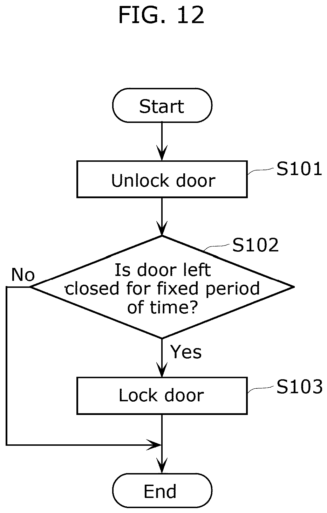

   FIG. 12 is a flowchart of operations of a delivery box according to a variation.

### [Description of Embodiment]

Hereinafter, an embodiment will be described in detail with reference to the drawings. Note that the embodiment described below illustrates a generic or specific example. Numerical values, shapes, materials, constituent elements, positions of constituent elements in an arrangement, connection forms of constituent elements, steps, a sequence of steps, and so on in the following embodiment are mere examples and do not intend to limit the scope of the present invention. Among the constituent elements described in the following embodiment, those that are not recited in any independent claim are described as optional constituent elements.

Note that each drawing is a schematic diagram and does not necessarily provide precise depiction. In the drawings, substantially the same constituent elements are given the same reference signs, and a detailed description thereof shall be omitted or simplified.

### [Embodiment]

### [Overview]

First, a configuration of a delivery system according to an embodiment will be described. FIG. 1 is an illustration of an overview of the delivery system according to the embodiment. FIG. 2 is a block diagram illustrating a functional configuration of the delivery system according to the embodiment.

Delivery system 10 according to the embodiment is a system capable of locking or unlocking delivery box 30 via portable terminals. Delivery box 30 includes a plurality of storage spaces 32 (plurality of sections). For example, as illustrated in FIG. 1, delivery staff is able to use first portable terminal 40 as a device for unlocking the doors of storage spaces 32 described above. Specifically, delivery staff is able to lock or unlock the doors of storage spaces 32 with a simple operation using first portable terminal 40.

As illustrated in FIG. 2, delivery system 10 includes server device 20, delivery box 30, first portable terminal 40, second portable terminal 50, and third portable terminal 60. The following is a continued detailed description of each device in delivery system 10 with reference to FIGS. 1 and 2.

### [Server Device]

First, server device 20 will be described. Server device 20 is a device that manages service conditions of delivery box 30. Server device 20 includes server communicator 21, information processor 22, and memory 23.

Server communicator 21 is a communication circuit (in other words, a communication module) for establishing communications between server device 20 and first and second portable terminals 40 and 50 via a wide-area communication network such as Internet 80. Server communicator 21 includes receiver 24 (in other words, a receiving circuit) and transmitter 25 (in other words, a transmission circuit). There are no particular limitations on communication standards used by server communicator 21.

Information processor 22 performs information processing for managing the service conditions of delivery box 30. For example, information processor 22 may be realized by a microcomputer, or may be realized by a processor.

Memory 23 is a storage device that stores control programs for use in information processing performed by information processor 22 in order to manage the service conditions of delivery box 30, and various types of information for use in the information processing. For example, memory 23 is realized by a semiconductor memory.

Memory 23 stores, for example, management information that indicates the service conditions of delivery box 30. FIG. 3 shows one example of the management information.

As illustrated in FIG. 3, the management information associates the ID of each delivery box, the installation location of the delivery box (e.g.,. the address of a collective house or a stand-alone house where the delivery box is installed), and the service conditions of storage spaces of the delivery box with one another. For example, the service conditions include two conditions, namely "vacant" and "in service". The term "vacant" means that there is no package in the storage space (i.e., the storage space is not in use), whereas the term "in service" means that the storage space contains a package (i.e., the storage space is in use).

The management information also includes the ID of each storage space. In the example illustrated in FIG. 3, the ID of each storage space is expressed by, for example, a combination of the ID of the delivery box and the number assigned to the storage space. Storage space 1 of the delivery box with an ID of "001xyz" has an ID of "001xyz-01".

Memory 23 also stores customer information. FIG. 4 shows one example of the customer information.

As illustrated in FIG. 4, the customer information includes, for example, the ID, address, name, telephone number, and e-mail address of the second portable terminal. For example, the customer information is stored in memory 23 as a result of an ordinary user who wants to use delivery system 10 (hereinafter, also referred to as a consignee) operating second portable terminal 50 to perform registration processing in advance.

In addition to the information described above, memory 23 also stores other information such as a plurality of unlock tokens for unlocking the doors of the delivery box managed by the management information.

### [Delivery Box]

Next, delivery box 30 will be described. Delivery box 30 is a device for delivery staff of delivery companies to leave packages when consignees are not at a facility in which delivery box 30 is installed (e.g., housing such as a collective house or a stand-alone house). In other words, delivery box 30 is a delivery locker. Delivery box 30 reduces the incidence of re-deliveries of packages. As illustrated in FIG. 1, delivery box 30 includes a plurality of storage spaces 32. For each storage space 32, delivery box 30 includes operation acceptor 31, locking device 33, detector 34, controller 35, wireless communicator 36, memory 37, battery storage space 38, and light emitter 39. To simplify the description, only one set of these constituent elements is illustrated in FIG. 2, but delivery box 30 may include a plurality of sets of these constituent elements depending on the number of storage spaces 32.

Operation acceptor 31 is a user interface that is operated by a consignee to manually unlock the door of storage space 32. Although a portable terminal is basically used to unlock the door of storage space 32 as described above, manual unlocking is also possible for a consignee who does not carry a portable terminal. Operation acceptor 31 is, for example, a keypad that accepts an operation of inputting an authentication code (in other words, a password) from a consignee. The keypad may be realized by hardware buttons, or may be realized by a touch panel.

Storage space 32 is a structure that defines one section in which a package is housed and, in other words, is a storehouse. Although delivery box 30 includes a plurality of storage spaces 32, it may include at least one storage space 32. Each storage space 32 has a door that is opened or closed by delivery staff or a consignee.

Locking device 33 is an electric lock for locking or unlocking the door of storage space 32. Locking device 33 is controlled by controller 35 and operates using a battery housed in battery storage space 38 as a power source.

Detector 34 is a sensor that detects opening and closing of the door of storage space 32. For example, detector 34 may be a magnetic sensor (i.e., a magnet sensor), or may be an optical sensor.

Controller 35 is a control device that controls locking device 33 and wireless communicator 36. For example, controller 35 may be realized by a microcomputer, or may be realized by a processor. For example, when detector 34 has detected closing of the door of storage space 32, controller 35 controls locking device 33 to lock or unlock the door of storage space 32.

Wireless communicator 36 is a communication circuit for allowing delivery box 30 to establish communications with first portable terminal 40 or second portable terminal 50. More specifically, wireless communicator 36 carries out short-distance wireless communication and uses communication standards such as Bluetooth (registered trademark) or Wi-Fi (registered trademark) for communications.

Delivery box 30 does not establish direct communications with server device 20, and communicates with server device 20 via a portable terminal using short-distance wireless communication established by wireless communicator 36. That is, delivery box 30 does not have a function of carrying out communications via a wide-area communication network such as the Internet. This simplifies a communication-related configuration of delivery box 30.

Memory 37 is a storage device that stores data such as control programs that are executed by controller 35. Memory 37 also stores service-condition information that indicates the service conditions of storage spaces 32 (information indicating whether each storage space 32 is in use). For example, memory 37 is realized by a semiconductor memory.

Battery storage space 38 is a battery holder for housing a battery and is, for example, provided for each storage space 32. Delivery box 30 operates not on alternating-current power supplied from a power system, but on direct-current power supplied from the battery housed in battery storage space 38. This eliminates the need for electric work for installation of delivery box 30. The battery housed in battery storage space 38 may be a primary battery (in other words, a dry battery), or may be a secondary battery.

Light emitter 39 emits light under the control of controller 35. For example, light emitter 39 blinks to notify that the door is locked or unlocked. Light emitter 39 may be realized by, for example, a light emitting device such as an LED.

### [First, Second, and Third Portable Terminals]

First portable terminal 40 is a portable information terminal such as a smartphone or a tablet terminal that is operated by delivery staff. First portable terminal 40 includes operation acceptor 41, terminal controller 42, first communicator 43, second communicator 44, memory 45, and display 46.

Operation acceptor 41 accepts an operation from delivery staff. For example, operation acceptor 41 may be realized by a touch panel and hardware buttons.

Terminal controller 42 performs various types of information processing relating to first portable terminal 40 in accordance with the operation accepted by operation acceptor 41. For example, terminal controller 42 may be implemented by a microcomputer, or may be implemented by a processor.

First communicator 43 is a communication circuit (in other words, a communication module) for allowing first portable terminal 40 to establish communications with server device 20 via a wide-area communication network such as Internet 80. For example, first communicator 43 may be a wireless communication circuit that carries out wireless communication using a mobile communication system. There are no particular limitations on communication standards used by first communicator 43.

Second communicator 44 is a communication circuit for allowing first portable terminal 40 to establish communications with delivery box 30. More specifically, second communicator 44 carries out short-distance wireless communication and uses communication standards such as Bluetooth (registered trademark) or Wi-Fi (registered trademark) for communications.

Memory 45 is a storage device that stores data such as control programs that are executed by terminal controller 42. For example, memory 45 may be realized by a semiconductor memory.

Display 46 displays an image under the control of terminal controller 42. Specifically, display 46 includes, for example, a liquid crystal panel or an organic EL panels as a display device.

Second portable terminal 50 is a portable information terminal such as a smartphone or a tablet terminal that is operated by a consignee. Second portable terminal 50 includes operation acceptor 51, terminal controller 52, first communicator 53, second communicator 54, memory 55, and display 56. Second portable terminal 50 is similar in configuration to first portable terminal 40, except that the second portable terminal is operated not by delivery staff but by a consignee. Thus, a detailed description thereof shall be omitted.

Third portable terminal 60 is a portable information terminal such as a smartphone or a tablet terminal that is operated by a manager of delivery box 30. Third portable terminal 60 includes operation acceptor 61, terminal controller 62, first communicator 63, second communicator 64, memory 65, and display 66. Third portable terminal 60 is similar in configuration to first portable terminal 40, except that the third portable terminal is operated not by delivery staff but by a manager. Thus, a detailed description thereof shall be omitted.

### [Exemplary Operation 1: Operation of Initially Setting Delivery Box]

Next, exemplary operation 1 of delivery system 10 will be described. FIG. 5 is a sequence diagram of exemplary operation 1 of delivery system 10. FIG. 5 is an illustration of an operation that is performed immediately after delivery box 30 is newly installed and that is an operation of enabling shared use of cryptographic keys between server device 20 and delivery box 30 (more specifically, each storage space 32).

After the installation of delivery box 30, each wireless communicator 36 corresponding each storage space 32 broadcasts and transmits storage-space information including a storage space ID that corresponds to wireless communicator 36 (S11). The storage-space information is broadcasted and transmitted regularly (intermittently).

When a manager carrying third portable terminal 60 comes near delivery box 30, second communicator 64 of third portable terminal 60 receives the storage-space information from each wireless communicator 36. As a result, a screen showing a list of storage spaces 32 is displayed on display 66 (S12). FIG. 6 shows one example of the screen showing a list of storage spaces 32.

The manager performs an operation of selecting storage space 32 while viewing the list on the screen displayed on display 66, and operation acceptor 61 accepts this selection operation (S13). In accordance with the selection operation accepted by operation acceptor 61, terminal controller 62 causes second communicator 64 to transmit a request to generate a cryptographic key to wireless communicator 36 of selected storage space 32 (S14).

Wireless communicator 36 of selected storage space 32 receives the request to generate a cryptographic key. Controller 35 of selected storage space 32 generates a cryptographic key in response to the received request to generate a cryptographic key, and stores the generated key in memory 37 (S15). For example, the cryptographic key may be generated using random numbers, or may be generated by any other known method.

Then, controller 35 of selected storage space 32 causes wireless communicator 36 to transmit the generated cryptographic key and a new registration request including a storage space ID to second communicator 64 (S16). When second communicator 64 has received the new registration request, terminal controller 62 causes first communicator 63 to transmit the received new registration request to server device 20 (S17). That is, third portable terminal 60 relays the new registration request.

When receiver 24 of server device 20 has received the new registration request (S18), information processor 22 adds the storage space ID included in the new registration request to the management information and associates and stores the storage space ID and the cryptographic key in memory 23 (S19). As a result, server device 20 becomes capable of managing the state of selected storage space 32. Note that the processing in steps S13 to S17 is performed for every storage space 32 included in delivery box 30.

In this way, newly installed delivery box 30 generates cryptographic keys and transmits the cryptographic keys during communications carried out for newly registering storage space IDs on server device 20. This facilitate the association of the cryptographic keys with the IDs of storage spaces 32. That is, the management of the cryptographic keys in server device 20 becomes easy. Note that there are no particular limitations on the method for allowing the shared use of cryptographic keys between delivery box 30 and server device 20, and any other method may be employed.

In the embodiment described below, information indicating the storage states of packages transmitted or received between delivery box 30 and server device 20 (e.g., package arrival information, package receipt information, and notification information) is encrypted and transmitted using the shared cryptographic keys described in exemplary operation 1, but a description of the encryption shall be omitted.

### [Exemplary Operation 2: Operation of Placing Package in Delivery Box]

Next, exemplary operation 2 of delivery system 10 will be described. FIG. 7 is a sequence diagram of exemplary operation 2 of delivery system 10. An operation performed when delivery staff places a package in reserved storage space 32 is illustrated in FIG. 7.

Each wireless communicators 36 corresponding each storage space 32 broadcasts and transmits storage-space information that includes the storage space ID and service condition information (information indicating whether or not the storage space is in service) regarding storage space 32 corresponding to wireless communicator 36 concerned (S31). The storage-space information is broadcasted and transmitted regularly (intermittently).

When delivery staff carrying first portable terminal 40 comes near delivery box 30, second communicator 44 of first portable terminal 40 receives storage-space information from each wireless communicator 36. As a result, a screen showing a list of storage spaces 32 is displayed on display 46 (S32).

The delivery staff performs an operation of selecting storage space 32 while viewing the list on the screen displayed on display 46, and operation acceptor 41 accepts the selection operation (S33). In accordance with the selection operation accepted by operation acceptor 41, terminal controller 42 causes second communicator 44 to transmit a connection request to wireless communicator 36 of selected storage space 32 (S34).

Wireless communicator 36 of selected storage space 32 receives the connection request. Controller 35 of selected storage space 32 establishes communications with first portable terminal 40 in response to the connection request and causes wireless communicator 36 to transmit a notification of completion of connection to second communicator 44 (S35).

Second communicator 44 of first portable terminal 40 receives the connection completion notification. In response to the connection completion notification, terminal controller 42 causes second communicator 44 to transmit an unlock request to wireless communicator 36 (S36).

Wireless communicator 36 of delivery box 30 receives the unlock request from second communicator 44. Controller 35 controls locking device 33 to unlock the door of reserved storage space 32 (S37).

When the door is unlocked, controller 35 causes wireless communicator 36 to transmit an unlock completion notification to second communicator 44 (S38). Second communicator 44 of first portable terminal 40 receives the unlock completion notification. As a result, display 46 displays an unlock completion screen (S39). FIG. 8 shows one example of the unlock completion screen. The unlock completion screen is a screen for notifying the delivery staff that the door is unlocked.

Thereafter, the delivery staff places a package in storage space 32 and closes the door (S40). Detector 34 detects that the door is closed (S41). When the closing of the door is detected, controller 35 controls locking device 33 to lock the door (S42) and causes wireless communicator 36 to transmit package arrival information as a lock completion notification. That is, when the closing of the door is detected, wireless communicator 36 transmits the package arrival information to first portable terminal 40 (S43). The package arrival information is information indicating that a package is placed in storage space 32, and the package arrival information includes a storage space ID of storage space 32 in which the package is housed.

When second communicator 44 of first portable terminal 40 has received the package arrival information, terminal controller 42 causes display 46 to display a lock completion screen (S44) and causes first communicator 43 to transmit the package arrival information to server device 20 (S45). FIG. 9 shows one example of the lock completion screen.

At this time, first portable terminal 40 also transmits identification information that indicates second portable terminal 50 of the consignee (e.g., ID, address, name, telephone number, and e-mail address of the second information terminal), in addition to the package arrival information, to server device 20. This information is input by, for example, an operation made to operation acceptor 41 from the delivery staff.

When receiver 24 of server device 20 has received the package arrival information, information processor 22 updates the management information on the basis of the package arrival information (S46). Specifically, information processor 22 identifies storage space 32 associated with the storage space ID included in the package arrival information and changes the service condition of identified storage space 32 from "vacant" to "in service" in the management information.

Next, information processor 22 acquires an unlock token for unlocking the door of storage space 32 from memory 23 and causes transmitter 25 to transmit the acquired unlock token. The second portable terminal serving as a transmission destination (i.e., second portable terminal 50) is identified based on the identification information received in step S45 and the customer information stored in memory 23. In this way, when receiver 24 has received the package arrival information from first portable terminal 40, transmitter 25 transmits the unlock token for unlocking the door of storage space 32 to second portable terminal 50 (S47).

The unlock token is one example of first authentication information. Although not shown, first communicator 53 of second portable terminal 50 receives the unlock token, and terminal controller 52 stores the received unlock token in memory 55. In step S47, for example, the consignee is also notified of the arrival of the package and the place of storage space 32 in which the package is housed, by means such as e-mail or push notification.

Here, although the consignee basically unlocks the door of storage space 32 with use of second portable terminal 50, an authentication code for manually unlocking the door is also set for a consignee who carries no portable terminal. The authentication code is one example of second authentication information.

Specifically, when operation acceptor 41 of first portable terminal 40 has accepted an operation of setting an authentication code (S48), terminal controller 42 causes second communicator 44 to transmit a setting request to wireless communicator 36 (S49). When wireless communicator 36 of storage space 32 in which the package is housed has received the setting request, controller 35 stores the authentication code in memory 37. That is, controller 35 sets the authentication code (S50). Note that the consignee may receive notification about the authentication code by means such as e-mail addressed to the consignee or a letter posted at a mailbox of the consignee.

As a final step, controller 35 updates the service condition information stored in memory 37 (S51). That is, controller 35 changes the service condition information stored in memory 37 from "vacant" to "in service".

### [Exemplary Operation 3: Operation of Taking Package Out of Delivery Box]

Next, exemplary operation 3 of delivery system 10 will be described. FIG. 10 is a sequence diagram of exemplary operation 3 of delivery system 10. FIG. 10 is an illustration of an operation performed when a consignee takes a package out of storage space 32 with use of second portable terminal 50.

Each wireless communicator 36 corresponding to each storage space 32 broadcasts and transmits storage-space information that includes a storage space ID corresponding to wireless communicator 36 concerned (S61). The storage-space information is broadcasted and transmitted regularly (intermittently).

When a consignee carrying second portable terminal 50 comes near delivery box 30, second communicator 54 of second portable terminal 50 receives the storage-space information from each wireless communicator 36. As a result, a screen showing a list of storage spaces 32 is displayed on display 56.

The consignee performs an operation of selecting storage space 32 in which the consignee's package is housed while viewing the list on the screen displayed on display 56, and operation acceptor 51 accepts this selection operation (S63). In accordance with the selection operation accepted by operation acceptor 51, terminal controller 52 causes second communicator 54 to transmit a connection request to wireless communicator 36 of selected storage space 32 (S64).

Wireless communicator 36 of selected storage space 32 receives the connection request. Controller 35 of selected storage space 32 establishes communications with second portable terminal 50 in response to the connection request and causes wireless communicator 36 to transmit a connection completion notification of to second communicator 54 (S65).

Second communicator 54 of second portable terminal 50 receives the connection completion notification. In response to the connection completion notification, terminal controller 52 causes second communicator 54 to transmit an unlock request to wireless communicator 36 (S66). The unlock request includes an unlock token. That is, as a result of execution of step S47, second communicator 54 transmits the unlock token stored in memory 55 to delivery box 30.

Wireless communicator 36 of delivery box 30 receives the unlock request including the unlock token from second communicator 54. Controller 35 performs authentication processing (S67) and determines whether or not the unlock token is a proper unlock token. For example, controller 35 may reference criterion information stored in advance in memory 37 to determine whether or not the unlock token is a proper unlock token.

When the unlock token included in the unlock request received in step S66 is determined as a proper unlock token, controller 35 controls locking device 33 to unlock the door of storage space 32 (S68) .

When the door is unlocked, controller 35 causes wireless communicator 36 to transmit a unlock completion notification to second communicator 54 (S69). Second communicator 54 of second portable terminal 50 receives the unlock completion notification. As a result, display 56 displays an unlock completion screen (S70). The unlock completion screen is a screen for notifying the consignee that the door is unlocked.

Thereafter, the consignee takes the package out of storage space 32 and closes the door (S71). Detector 34 detects that the door is closed (S72). When the closing of the door is detected, controller 35 controls locking device 33 to lock the door (S73), and causes wireless communicator 36 to transmit package receipt information as a lock completion notification. That is, when the closing of the door is detected, wireless communicator 36 transmits the package receipt information to second portable terminal 50 (S74). The package receipt information is information indicating that the package is taken out of storage space 32 (in other words, the consignee has received the package). The package receipt information includes the storage space ID of storage space 32 out of which the package has been taken.

When second communicator 54 of second portable terminal 50 has received the package receipt information, terminal controller 52 causes display 56 to display a lock completion screen (S75) and causes first communicator 53 to transmit the package receipt information to server device 20 (S76).

When receiver 24 of server device 20 has received the package receipt information, information processor 22 updates the management information on the basis of the package receipt information (S77). Specifically, information processor 22 identifies storage space 32 associated with the storage space ID included in the package receipt information and changes the service condition of identified storage space 32 from "in service" to "vacant" in the management information.

Similarly, controller 35 of delivery box 30 updates the service condition information stored in memory 37 (S78). Controller 35 changes the service condition information stored in memory 37 from "in service" to "vacant".

### [Exemplary Operation 4: Operation 2 of Taking Package Out of Delivery Box]

Next, exemplary operation 4 of delivery system 10 will be described. FIG. 11 is a sequence diagram of exemplary operation 4 of delivery system 10. FIG. 11 is an illustration of an operation performed when a consignee directly operates delivery box 30 to take a package out of storage space 32.

Operation acceptor 31 of delivery box 30 accepts an unlocking operation from a consignee (S81). The unlocking operation involves an operation of inputting an authentication code. Controller 35 performs authentication processing (S82) and determines whether or not the authentication code indicated by the accepted input operation is proper authentication information (or matches the authentication code set in step S50). When the authentication code indicated by the accepted input operation is determined as proper authentication information, controller 35 controls locking device 33 to unlock the door (S83). Controller 35 also notifies the consignee that the door is unlocked (S84). For example, controller 35 causes light emitter 39 to blink for a fixed period of time.

Thereafter, the consignee takes the package out of storage space 32 and closes the door (S85). Detector 34 detects that the door is closed (S86). When the closing of the door is detected, controller 35 controls locking device 33 to lock the door (S87) and notifies the consignee that the door is locked (S88). For example, controller 35 causes light emitter 39 to blink for a fixed period of time.

Then, controller 35 updates the service condition information stored in memory 37 (S89). That is, controller 35 updates the service condition information stored in memory 37 from "in service" to "vacant".

Incidentally, since delivery box 30 cannot communicate directly with server device 20 as described above, server device 20 cannot be notified that the package is taken out manually. That is, the management information in server device 20 is not updated, even though the package has been taken out.

In view of this, controller 35 stores, in memory 37, unlock means information indicating that the door is unlocked not by second portable terminal 50 but by manual operation (S90), and wireless communicator 36 includes notification information in storage-space information that is broadcasted and transmitted regularly while memory 37 stores the unlock means information (S91). In other words, the unlock means information is information indicating that the door is unlocked based on the authentication code, and the notification information is information for notifying a change in the storage state of the package in storage space 32.

Thereafter, when delivery staff carrying first portable terminal 40 comes near delivery box 30, second communicator 44 receives the storage-space information. When the storage-space information received by second communicator 44 includes the notification information, terminal controller 42 causes first communicator 43 to transmit the notification information to server device 20 (S92). This allows information processor 22 of server device 20 to update the management information on the basis of the notification information received by receiver 24 (S93). Note that the notification information is deleted from memory 37 after having been transmitted to server device 20.

In this way, when communicating with first portable terminal 40 after the storage of the unlock means information, wireless communicator 36 transmits the notification information for notifying a change in the storage state of the package in storage space 32 on the basis of the unlock means information to first portable terminal 40. Accordingly, even if delivery box 30 is incapable of directly communicating with server device 20, delivery box 30 can notify server device 20 that the package is taken out manually.

Note that storage spaces 32 may be disabled while memory 37 stores the unlock means information. In this case, for example, controller 35 changes the service condition information stored in memory 37 to "in service" or "disabled".

### [Variations]

When a door remains closed for a fixed period of time since unlocking (i.e., when the door is not opened for a while), delivery box 30 may lock the door. FIG. 12 is a flowchart illustrating such an operation of delivery box 30 according to a variation.

Controller 35 controls locking device 33 to unlock the door of storage space 32 (S101). Thereafter, controller 35 determines on the basis of the result of detection by detector 34 whether the door remains closed for a fixed period of time since unlocking (S102). If it is determined that the door remains closed for a fixed period of time (Yes in S102), controller 35 controls locking device 33 to lock the door of storage space 32 (S103). If it is determined that the door is opened within a fixed period of time (No in S102), controller 35 finishes the operation.

Delivery box 30 as described above can avoid a situation in which the door is left unlocked. For example, delivery box 30 can reduce the occurrence of theft of packages in storage spaces 32.

### [Advantageous Effects]

As described above, delivery box 30 includes storage spaces 32 in which packages are housed, controller 35 that generates cryptographic keys for encrypting information indicating the storage states of packages in storage spaces 32, and wireless communicator 36 that establishes wireless communication with third portable terminal 60 to transmit the generated cryptographic keys to server device 20 via third portable terminal 60.

The shared use of the cryptographic keys with server device 20 allows delivery box 30 as described above to encrypt and transmit information to server device 20 and to receive encrypted information from server device 20. That is, delivery box 30 can improve the safety of transmission and reception of information between server device 20 and delivery box 30. Moreover, the configuration of delivery box 30 for generating the cryptographic keys enables simultaneous transmission of the ID of delivery box 30 and the cryptographic keys and thereby facilitates the association of the ID of delivery box 30 (the IDs of storage spaces 32) with the cryptographic keys. That is, the management of the cryptographic keys in server device 20 becomes easy.

For example, delivery box 30 may further include locking device 33 for locking and unlocking the doors of storage spaces 32. Wireless communicator 36 may further receive an unlock request including an unlock token from second portable terminal 50. When the unlock token included in the received unlock request is determined as proper authentication information, controller 35 may control locking device 33 to unlock the door. The unlock token is one example of the first authentication information.

Delivery box 30 as described above can also unlock the doors of storage spaces 32 with a user operation using the unlock token transmitted from second portable terminal 50.

For example, delivery box 30 may further include operation acceptor 31 that accepts an operation of inputting the pass code of a consignee. When the authentication code indicated by the accepted input operation is determined as proper authentication information, controller 35 may control locking device 33 to unlock the door. The consignee is one example of the user, and the authentication code is one example of the second authentication information.

Delivery box 30 as described above can unlock the door of storage space 32, using the authentication code received from the user.

For example, delivery box 30 may further include memory 37. Controller 35 may store the unlock means information indicating that the door is unlocked based on the authentication code in memory 37. When communicating with first portable terminal 40 after the storage of the unlock means information, wireless communicator 36 transmits the notification information for notifying a change in the storage state of the package in storage space 32 on the basis of the unlock means information, to first portable terminal 40.

Delivery box 30 as described above holds the unlock means information until it becomes capable of communicating with first portable terminal 40. Accordingly, when becoming capable of communicating with first portable terminal 40, delivery box 30 can notify server device 20 of a change in the storage state of a package (in other words, the package has been taken out manually).

For example, delivery box 30 may further include detector 34 that detects the opening and closing of the door. When it is determined on the basis of the result of detection by detector 34 that the door remains closed for a fixed period of time since unlocking, controller 35 may control locking device 33 to lock the door.

Delivery box 30 as described above can avoid a situation in which the door is left unlocked.

The information processing method to be executed by a computer such as delivery box 30 includes generating cryptographic keys for encrypting information indicating the storage states of packages in storage spaces 32 in which the packages are housed, and establishing wireless communication with portable terminals in order to transmit the generated cryptographic keys to server device 20 via the portable terminals.

The shared use of the cryptographic keys with server device 20 allows the information processing method as described above to enable encryption and transmission of information to server device 20 and reception of encrypted information from server device 20. That is, delivery box 30 can improve the safety of transmission and reception of information between server device 20 and delivery box 30. The configuration of delivery box 30 for generating cryptographic keys enables simultaneous transmission of the ID of delivery box 30 and the cryptographic keys and thereby facilitates the association of the ID of delivery box 30 (the IDs of storage space 32) with the cryptographic keys. That is, the management of the cryptographic keys in server device 20 becomes easy.

### [Other Embodiments]

While one embodiment has been described thus far, the present invention is not intended to be limited to the embodiment described above.

For example, in the above-described embodiment, authentication processing using other known techniques may be used, instead of the authentication processing using unlock tokens. For example, authentication processing using onetime passwords may be employed. Alternatively, other communication sequences may be used as communication sequences between the portal terminals and the delivery box in the embodiment described above.

In the embodiment described above, processing executed by a specific processor may be executed by another processor. For example, part of the information processing performed by the server device may be performed by a portable terminal or the delivery box.

There are no particular limitations on the method of communications between devices in the embodiment described above. When communications are established between two devices in the embodiment described above, a relay device (not shown) may be provided between the two devices.

The sequences of processing described with reference to the sequence diagrams or other drawings in the embodiment described above are merely examples. The sequence of a plurality of processing steps may be changed, or a plurality of processing steps may be performed in parallel.

In the embodiment described above, each constituent element may be realized by executing a software program suitable for the constituent element. Each constituent element may also be realized by a program executor such as a CPU or a processor reading out and executing a software program recorded on a hard disk or a recording medium such as a semiconductor memory.

Each constituent element may be realized by hardware. For example, each constituent element may be a circuit (or an integrated circuit). These circuits may configure a single circuit as a whole, or may configure separate circuits. Each of these circuits may be a general-purpose circuit, or may be a dedicated circuit.

It is to be noted that general or specific aspects of the present invention may be realized by a system, a device, a method, an integrated circuit, a computer program, or a computer-readable recording medium such as a CD-ROM, or may be realized by any combination of a system, a device, a method, an integrated circuit, a computer program, and a recording medium. For example, the present invention may be executed as a communication method that is executed by a computer such as a delivery box, or may be realized as a program for causing a computer to execute such a communication method. The present invention may also be realized as a non-transitory computer-readable recording medium that records programs described in the embodiment described above.

In the embodiment described above, the delivery system is realized by a plurality of devices, but may be realized by a single device. For example, the delivery system may be realized as a single device equivalent to the server device. When the delivery system is realized by a plurality of devices, constituent elements of the delivery system may be divided into the devices in any way.

The present invention also includes other variations such as embodiments obtained by applying various modifications conceivable by those skilled in the art to each embodiment, and embodiments implemented by any combination of constituent elements and functions of each embodiment without departing from the scope of the present invention.

### [Reference Signs List]

- 20: server device
- 30: delivery box
- 31: operation acceptor
- 32: storage space
- 33: locking device
- 34: detector
- 35: controller
- 36: wireless communicator
- 40: first portable terminal (portable terminal)
- 50: second portable terminal (portable terminal)
- 60: third portable terminal (portable terminal)

## Claims

1. A delivery box, comprising:
a storage space in which a package is housed;
a controller that generates a cryptographic key for encrypting information indicating a storage state of a package in the storage space; and
a wireless communicator that establishes wireless communication with a portable terminal to transmit the cryptographic key generated to a server device via the portable terminal.

2. The delivery box according to claim 1, further comprising:
a locking device that locks and unlocks a door of the storage space,
wherein the wireless communicator further receives an unlock request including first authentication information from a portable terminal, and
when the first authentication information included in the unlock request received is determined as proper authentication information, the controller further controls the locking device to unlock the door.

3. The delivery box according to claim 2, further comprising:
an operation acceptor that accepts an input operation of inputting second authentication information from a user,
wherein, when the second authentication information indicated by the input operation accepted is determined as proper authentication information, the controller further controls the locking device to unlock the door.

4. The delivery box according to claim 3, further comprising:
a memory,
wherein the controller stores information indicating that the door is unlocked based on the second authentication information, in the memory, and
when communicating with a portable terminal after the information is stored, the wireless communicator transmits notification information to the portable terminal, the notification information being information for notifying a change in the storage state of the package in the storage space in accordance with the information.

5. The delivery box according to any one of claims 1 to 4, further comprising:
a detector that detects opening and closing of the door,
wherein, when it is determined from a result of detection by the detector that the door remains closed for a fixed period of time since unlocking of the door, the controller controls the locking device to lock the door.

6. An information processing method to be executed by a delivery box, the information processing method comprising:
generating a cryptographic key for encrypting information indicating a storage state of a package in a storage space in which the package is housed; and
establishing wireless communication with a portable terminal to transmit the cryptographic key generated to a server device via the portable terminal.
